(19) Europäisches Patentamt
European Patent Office
Office européen des brevets

(11) Veröffentlichungsnummer: **0 104 377**
**B1**

(12) # EUROPÄISCHE PATENTSCHRIFT

(45) Veröffentlichungstag der Patentschrift: **13.11.85**

(51) Int. Cl.⁴: **C 09 D 3/72,** C 08 G 18/10, D 06 N 3/14, C 08 G 18/32

(21) Anmeldenummer: **83107759.9**

(22) Anmeldetag: **06.08.83**

(54) **Verfahren zur Herstellung von Beschichtungsmassen, wässrige Dispersionen von PU-Reaktiv-Systemen und ihre Verwendung zur Beschichtung.**

(30) Priorität: **20.08.82 DE 3231062**

(43) Veröffentlichungstag der Anmeldung: **04.04.84 Patentblatt 84/14**

(45) Bekanntmachung des Hinweises auf die Patenterteilung: **13.11.85 Patentblatt 85/46**

(84) Benannte Vertragsstaaten: **AT BE CH DE FR GB IT LI NL SE**

(56) Entgegenhaltungen:
**EP - A - 0 004 597**
**FR - A - 2 094 058**
**FR - A - 2 211 557**
**GB - A - 996 208**
**US - A - 3 384 506**

(73) Patentinhaber: **BAYER AG, Konzernverwaltung RP Patentabteilung, D-5090 Leverkusen 1 Bayerwerk (DE)**

(72) Erfinder: **Thomà, Wilhelm, Dr., Birkenweg 25, D-5090 Leverkusen 3 (DE)**
Erfinder: **Langel, Rolf, Hüscheider-Strasse 85, D-5090 Leverkusen 3 (DE)**
Erfinder: **Schmitz, Anton, Lützenkirchener Strasse 92, D-5090 Leverkusen 3 (DE)**
Erfinder: **Schröer, Walter, Dr., Nicolai-Hartmann-Strasse 29, D-5090 Leverkusen 1 (DE)**

**EP 0 104 377 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Gegenstand der Erfindung ist ein Verfahren zur Herstellung von feindispersen, gut streichbaren Polyurethan-Reaktiv-Beschichtungsmassen mit einer Viskosität von 3000 bis 22 000 mPa.s/25°C und einem Gesamtfeststoffgehalt von 20 bis 69 Gew.-%, gekennzeichnet durch eine Dispergierung von 20 bis 69 Gew.-%, vorzugsweise durch Ketoxime blockierten NCO-Prepolymeren in Wasser in Gegenwart von 0,05 bis 5 Gew.-% an Emulgatoren, Verdickung der dünnflüssigen Dispersion durch 0,1 bis 2,5 Gew.-% wasserlöslicher Verdickungsmittel auf Basis höhermolekularer Polyethylenoxide und Salzen der Poly(meth)acrylsäure oder Salzen der Carboxymethylzellulosen, gegebenenfalls unter Zusatz weiterer wäßriger Polymerlösungen, Polymerlatices und/oder Polymerdispersionen, gegebenenfalls unter Zusatz von Verlaufmitteln und üblichen Zusatzstoffen wie Pigmenten, Füllstoffen und Stabilisatoren und Zusatz von etwa äquivalenten Mengen (bezogen auf die NCO-Prepolymere) von Polyaminen, vorzugsweise (cyclo)aliphatischen Diaminen, wobei die Zusätze der Verdickungsmittel und der Polyamine vor, während oder nach der Dispergierung, vorgenommen werden und die Zugaben der wäßrigen Polymerlösungen und/oder Polymerdispersionen nach der Dispergierung der NCO-Polymere und vor oder nach der Zugabe der Verdickungsmittel erfolgen.

Erfindungsgegenstand sind auch verfahrensgemäß hergestellte Beschichtungsmassen und ihre Verwendung zur Reaktiv-Beschichtung von textilen oder Leder-Substraten.

Die Herstellung von Kunstleder und anderen vielfältig verwendbaren, beschichteten textilen Flächengebilden auf Basis von Polyurethan-Kunststoffen ist Stand der Technik. Nach dem Transfer- oder Direktbeschichtungsverfahren werden in ein- oder mehrschichtigem Aufbau Beschichtungsmaterialien für modische Oberbekleidung, Arbeits- und Regenschutzbekleidung, Schuhobermaterial, Täschner- und Polstermaterial, Zeltstoffe, Planen, Transportbänder etc. gefertigt.

Die Polyurethane werden als Lösung der ausreagierten Polyurethane in organischen Lösemitteln oder in Form ihrer wäßrigen Dispersionen verarbeitet. Aus den meist 20—50%igen Lösungen oder Dispersionen können nach dem Rakel- oder Reverse-roll-coater-Verfahren Schichten mit Feststoff-Auflagen pro Strich von 10—50 $g/m^2$, besonders 20—40 $g/m^2$ erzeugt werden. Bei Verwendung von Lösungen bereitet die Rückgewinnung oder ökologisch unbedenkliche Vernichtung der Lösungsmittel erheblichen Aufwand.

Es gewinnen daher lösemittelfreie Systeme, wie wäßrige Polyurethan-Dispersionen und besonders die neuerdings in die Beschichtungstechnik eingeführten, lösemittelarmen oder lösemittelfreien High-Solid-Reaktiv-Systeme zunehmend an Bedeutung.

Während die 30—50%igen Polyurethan-Dispersionen für die Herstellung von technisch üblichen dünnen Auftragsschichten mit einer Auftragsmenge von 20 bis 40 $g/m^2$ pro Strich erlauben, sind die in den DE-OS 2 902 090 und DE-OS 2 814 079 beschriebenen, mit aminischen Kettenverlängerern bzw. Vernetzern hitzehärtbaren High-Solid-Reaktiv-Polyurethan-Systeme besonders zur Herstellung dicker Schichten, etwa für Haftstriche, geeignet, z. B. mit Auflagemengen von 60 bis 300 $g/m^2$, während sie sich nur sehr bedingt für noch geringere Auflagemengen, z. B. 30 bis 50 $g/m^2$ einsetzen lassen. Der Stand der Technik ist besonders in der DE-OS 2 814 079 dokumentiert. Man geht dazu von blockierten NCO-Prepolymeren oder sehr geringe Mengen (z. B. bis 10%) organische Lösungsmittel enthaltenden, blockierten NCO-Prepolymerlösungen aus und rührt begrenzte Mengen (3—50 Gew.-%) an wäßrigen Polymerdispersionen oder Polymerlösungen mit einem Feststoffgehalt von 20 bis 70 Gew.-% ein und setzt die Di- oder Polyamine zu. Es werden relativ viskose, relativ grobteilige Dispersionen bzw. Mischungen erhalten, welche vorzugsweise nur für dickere Beschichtungsstriche in der Größenordnung von 60 bis 400 $g/m^2$ Auflagemenge und deshalb vorzugsweise in Anwendung für relativ dicke Haftstriche verwendet werden.

Die blockierten NCO-Prepolymere besitzen selbst zumeist hohe Viskositäten, z. B. $\geq$ 80 000 mPa.s/20°C. Der Zusatz der Dispersionen oder wäßrigen Polymerlösungen ergibt eine relativ geringe Viskositätsänderung. Dabei sind die NCO-Prepolymeren bis zum Verhältnis von etwa 1 : 1 mit wäßrigen Dispersionen oder Polymerlösungen mischbar.

Versucht man niedriger viskose Mischungen herzustellen, so werden aus blockiertem NCO-Prepolymer und zugesetzter PU-Dispersion in höherer Menge instabile Mischungen erhalten. Dünne Beschichtungsstriche auf dieser Basis, z. B. mit Auflagemengen von 40 $g/m^2$, zeigen schlechten Verlauf, Oberflächenstörungen oder Lunker in dem Beschichtungsstrich, besonders bei Transfer-Verfahren. Sie sind daher insbesonders für Deckstriche, welche vom Aussehen und den Eigenschaften her besonders hohen Anforderungen genügen müssen, wenig geeignet.

Es war demnach nach einem Verfahren zu suchen, mit dem auch mit hitzehärtbaren Reaktiv-Polyurethan-Zubereitungen auf der Basis von blockierten NCO-Prepolymeren und Polyaminen einwandfreie Streichpasten entsprechender Viskosität in feinteiliger Dispersionsform zum Beschichten von textilen Flächengebilden oder Leder mit nur geringen Feststoffauflagen von 10—50 $g/m^2$ nach der Transfer- oder Direktbeschichtungsmethode zugänglich werden, welche fehlerfreie Beschichtungen auf dem guten Eigenschaftsniveau von Polyurethanen aus Reaktiv-Polyurethan-Zubereitungen auch in der Anwendung als Deckschicht ergeben.

Gegenstand der Erfindung ist nun ein Verfahren zur Herstellung von feindispersen, gut streichbaren, wäßrigen, hitzehärtbaren PU-Reaktiv-Dispersions-Beschichtungsmassen auf der Basis von blockierten NCO-Prepolymeren, Polyaminen, gegebenenfalls Polyurethan-Dispersionen und/oder wäßrigen Polymerlösungen zum Beschichten von textilen Flächengebilden, Kunstleder oder Leder nach dem Direkt- oder Transferbeschichtungsverfahren, dadurch gekennzeichnet, daß man

a) blockierte NCO-Prepolymere
b) in Gegenwart von 0,05—5 Gew.-%, bezogen auf a), vorzugsweise 0,1 bis 2,5 Gew.-%, Emulgatoren zu 20—69%, vorzugsweise 35—50% a) enthaltenden wäßrigen Dispersionen dispergiert und bei oder nach der Dispergierung mit
c) gegebenenfalls Verlaufmitteln und üblichen Zusatzmitteln wie Pigmenten, Füllstoffen und Stabilisatoren, sowie bis zu 10 Gew.-%, bezogen auf a), an Lösungsmitteln,
d) mit 0,1 bis 2,5 Gew.-%, bevorzugt 0,3 bis 1,5 Gew.-%, bezogen auf a), wasserlöslichen Verdikkungsmitteln auf der Basis von langkettigen Polyethylenoxiden, Salzen von Poly(meth)acrylsäuren oder Salzen von Carboxymethylzellulose,
e) mit gegebenenfalls weiteren wäßrigen Polymerlösungen und/oder Polymerdispersionen in Mengen von bis 100 Gew.-%, vorzugsweise 10 bis 50 Gew.-% Polymerfeststoff, bezogen auf a) und mit
f) etwa äquivalenten Mengen an (cyclo)aliphatischen Di- und/oder Polyaminen, vorzugsweise (cyclo)aliphatischen Diaminen versetzt und so in eine streichfähige Beschichtungsmasse mit einer Viskosität von 3000 bis 22 000 mPa.s/25° C, vorzugsweise 4000 bis 15 000 mPa.s/25° C mit einem Feststoffgehalt von 20—69 Gew.-%, vorzugsweise 35—50 Gew.-% überführt.

In einer bevorzugten Ausführungsform werden in eine Lösung von Wasser, Emulgator, wasserlöslichen Verdickern und gegebenenfalls Verlaufshilfsmitteln das blockierte NCO-Prepolymer eindispergiert und, gegebenenfalls nach Zusatz weiterer Polymerlösungen oder Polymerdispersionen, gegebenenfalls weiterer Zusatzstoffe wie Lichtstabilisatoren oder Füllstoffe, etwa äquivalente Mengen der Polyamine zugesetzt und es wird, gegebenenfalls unter Zusatz weiterer Verdickungsmittel bzw. Wasser, auf die gewünschte Streichviskosität und Konzentration eingestellt.

Durch die Dispergierung der PU-Reaktiv-Beschichtungsmassen und Dispergierung des blockierten NCO-Prepolymers in Wasser unter Zusatz von Emulgatoren entstehen nur sehr niederviskose, feinteilige Dispersionen mit etwa 100 bis 1000 mPa.s, welche für sich alleine keine Streichfähigkeit besitzen. Erst durch die Verwendung geeigneter Verdicker vor, während oder nach der Dispergierung lassen sich diese Dispersionen in einen streichfähigen Zustand bringen, wobei der weitere Zusatz von Verlaufmitteln und sonstigen Zusatzstoffen den zufriedenstellenden Ausfall der Beschichtung fördert.

Erfindungsgemäß werden so sehr feinteilige, gut streichfähige reaktive Polyurethan-Beschichtungsmassen auf Dispersionsbasis erhalten, welche Beschichtungsauflagen auch in geringen Auflagemengen von 10—50 g/m², vorzugsweise 20—40 g/m² aufzubringen gestatten, wobei ausgezeichneter Verlauf und Filmbildungsvermögen der Beschichtungsmasse und ausgezeichnete mechanische Eigenschaften der thermisch vernetzten Beschichtungen erhalten werden. Diese Beschichtungsmassen eignen sich gut zur Herstellung dünner Deckstriche.

Die erfindungsgemäßen Streichpasten eignen sich z. B. im Transferverfahren zur Herstellung von Deckstrichen, die durch besonders trockenen Griff gekennzeichnet sind, kompakten Haft- und Zwischenstrichen, nach Überführung in mechanisch geschlagene Schaumpasten auch zur Herstellung von geschäumten Haft- und Zwischenstrichen, die eine nur geringe Penetration in textile Gewebe zeigen.

Im Direktstreichverfahren können mit den erfindungsgemäßen Streichpasten textile Flächengebilde, wie Gewebe, Gewirke, Vliese aus den unterschiedlichsten Fasermaterialien grundiert und mit weiteren Strichen beschichtet werden. Auch hier erweist sich die geringe Penetration in das Substrat als vorteilhaft.

Nach dem Stand der Technik war es überraschend, daß sich die sehr niederviskosen wäßrigen Dispersionen der Poylurethan-Reaktivsysteme aus NCO-Prepolymeren und Polyaminen stabil in wäßriger Dispersion herstellen lassen und in sehr feinteiliger Form durch Zugabe sehr geringer Mengen an bestimmten Verdickungsmitteln sich hervorragend als Beschichtungsmassen, insbesondere für dünne Aufstriche, benutzen lassen.

Ebenso wird die Verwendung zur Reaktiv-Beschichtung von Substraten, insbesondere textilen, Kunstleder- oder Ledersubstraten beansprucht.

Die hitzehärtbaren Polyurethan-Reaktiv-Systeme, welche erfindungsgemäß zu verdickten Streichpasten dispergiert werden, sind an sich bekannt. Es handelt sich um blockierte NCO-Prepolymere und zum Aufbau des Polyharnstofferethans unter Abspaltung des Blockierungsmittels zu verwendende Di- und/oder Polyamine.

Sie werden ausführlich in der DE-OS 2 902 090 und der DE-OS 2 814 079 der Anmelderin beschrieben.

Die Urethanpolymeren mit blockierten NCO-Endgruppen (Komponente a) der erfindungsgemäßen Beschichtungsmassen) werden aus gegebenenfalls verzweigten, 2 bis 8, vorzugsweise 2 bis 4, besonders bevorzugt 2 oder 3, gegenüber NCO reaktive Gruppen wie Hydroxyl-, Amino-, Hydrazid-, Thiol- oder Carboxylgruppen, vorzugsweise aber Hydroxylgruppen aufweisenden Verbindungen mit einer Molmasse zwischen 400 und 10 000, vorzugsweise 1000 bis 4000 (insbesondere Polyesterpolyolen und

besonders bevorzugt Polyetherpolyolen), sowie einem Überschuß an aromatischen und/oder cycloaliphatischen und/oder aliphatischen Polyisocyanaten und Blockierungsmitteln hergestellt.

Vorzugsweise erhält man dabei ein NCO/OH-Äquivalentverhältnis von 1 : 1,3 bis 1 : 2,8, besonders bevorzugt 1 : 1,8 bis 1 : 2,1 ein, so daß die Urethanprepolymeren 1—10 Gew.-%, bevorzugt 2—4 Gew.-% an NCO-Gruppen (in blockierter Form) enthalten.

Die zur Herstellung der Urethanprepolymeren verwendeten Polyester und/oder Polyether sind aus den an sich bekannten Bausteinen, wie z. B. Di- oder Trialkoholen, Di- und Tricarbonsäuren, Hydroxycarbonsäuren, Lactonen, Ethylenoxid, Propylenoxid, Butylenoxid-1,2 oder Tetrahydrofuran bzw. Gemischen daraus aufgebaut. Bevorzugt sind Polyether, Polyester, Polyactone und Polycarbonate, deren Schmelzpunkte unter 60° C, bevorzugt unter 40° C liegen.

Für den Aufbau der erfindungsgemäßen Beschichtungsmassen geeignete höhermolekulare Verbindungen mit gegenüber NCO-reaktiven Gruppen werden im Detail in der DE-OS 2 431 846, der DE-OS 2 402 840 (US-PS 3 984 607) der DE-AS 2 457 387 (US-PS 4 035 213) und der DE-OS 2 832 253 beschrieben.

Gegebenenfalls können niedermolekulare Verbindungen der Molmasse 32—399 mit zwei oder mehreren, gegenüber NCO reaktiven Gruppen, vorzugsweise Hydroxylgruppen mitverwendet werden, wie sie in der DE-OS 2 832 253 beschrieben sind, z. B. 1,4-Butandiol, Neopentylglykol oder Hydrochinon-bis(hydroxyethyl)-ether.

Besonders lichtechte und alterungsbeständige Systeme werden durch Mitverwendung von Biscarbazinester-polyolen der allgemeinen Formel

$$OH—R—O\cdot\overset{\overset{\displaystyle O}{\|}}{C}\cdot NH\cdot NH\cdot\overset{\overset{\displaystyle O}{\|}}{C}\cdot O—R—OH$$

in der

R einen geradkettigen und/oder verzweigten $C_1—C_5$-Alkylen-, oder Hydroxyl-substituierten Alkylenrest, vorzugsweise einen Ethylen- und/oder 1,2-Propylenrest, darstellt, erhalten.

Diese »Biscarbazinester-polyole« stellen Umsetzungsprodukte von 1 Mol Hydrazin mit 2 Mol eines beliebigen cyclischen Alkylencarbonates mit 5- oder 6-gliedrigen Ringen dar. Beispiele für die cyclischen Alkylencarbonate als Reaktivkomponenten sind Ethylenglykol- und Propylenglykolcarbonat (2-Oxo-1,3-dioxolan bzw. 2-Oxo-4-methyl-1,3-dioxolan), das Umsetzungsprodukt aus 1 Mol Glycerin mit 1 Mol Diphenylcarbonat (2-Oxo-4-hydroxymethyl-1,3-dioxolan sowie 1,3-Dioxanon-2-(Ringverbindungen), wie sie durch Umsetzung von z. B. 1,3-Propandiol oder Neopentylglykol mit Diphenylcarbonat gebildet werden. Bevorzugt werden Ethylenglykol- und Propylenglykolcarbonat als Reaktionspartner für das Hydrazin eingesetzt. Man erhält diese Biscarbazinester-polyole, vorzugsweise Biscarbazinesterdiole, indem man Hydrazinhydrat, gegebenenfalls in einem die Umsetzung moderierenden Lösungsmittel wie Toluol oder Isopropanol gelöst, vorlegt, die entsprechende Menge des cyclischen Alkylencarbonates hinzugibt, die Umsetzung bei ca. 100° C vervollständigt und schließlich das Hydratwasser, sowie gegebenenfalls vorhandenes Lösungmittel destillativ entfernt. Die in Form von farblosen Ölen (vorzugsweise bei Propylencarbonatderivaten) oder als Feststoffe (vorzugsweise bei Umsetzung mit Ethylencarbonat) anfallenden Verbindungen können in diesem Zustand direkt für die erfindungsgemäßen Umsetzungen eingesetzt werden. Bevorzugt sind die Umsetzungsprodukte des Hydrazins mit Propylencarbonat, welche zumindest überwiegend sekundäre OH-Gruppen besitzen. Der erfindungsgemäße Einbau der Biscarbazinesterpolyole ergibt einen überraschend hohen Effekt hinsichtlich einer Verbesserung von Lichtechtheiten, sowie Lichtbeständigkeiten (d. h. weniger Verfärbung bzw. weniger Abbau bei Belichtung), als auch eine sehr deutliche Verminderung der Thermovergilbung bei der Hitzehärtung der Reaktivbeschichtungsmassen.

Ferner können als niedermolekulare Polyole tertiäre aliphatische Aminogruppen enthaltenden Di-, Tri- und/oder Polyole, z. B. N-Methyl-bis-(2-hydroxypropyl)-amin, N-Methyl-bis-(2-hydroxyethyl)-amin, N,N'-Bishydroxyethyl-piperazin oder Triethanolamin, verwendet werden.

Als aliphatische und/oder cycloaliphatische Polyisocyanate sind solche geeignet, wie sie z. B. in den US-Patentschriften 3 984 607 und 4 035 213 beschrieben sind. Besonders genannt seien Hexamethylen-1,6-diisocyanat, 1-Isocyanato-3,3,5-trimethyl-5-isocyanatomethyl-cyclohexan und 4,4'- und/oder 2,4'-Diisocyanatodicyclohexylmethan, sowie Di- oder Tetra-$C_1—C_4$-alkylderivate dieser Diisocyanate, sowie insbesondere Gemische dieser genannten Diisocyanate. Bevorzugt werden Hexandiisocyanat, Isophorondiisocyanat und 4,4'-Diisocyanatodicyclohexylmethan. Es können auch höherfunktionelle Isocyanate eingesetzt werden, z. B. 1,6,11-Triisocyanatoundecan oder Biuret-polyisocyanate auf Basis Hexandiisocyanat, doch sind diese weniger bevorzugt.

Während die aliphatischen Polyisocyanate bei Belichtung weniger verfärbende Beschichtungen ergeben als aromatische Polyisocyanate, so besitzen letztere jedoch eine höhere Reaktivität, auch in blockiertem Zustand, und lassen sich daher bei niedrigeren Temperaturen in die kettenverlängerten oder vernetzten Polyurethan-Harnstoffe überführen. Als aromatische Di- und Polyisocyanate können die in den DE-OS 2 902 090, DE-OS 2 814 079 und der DE-OS 2 823 253 beschriebenen, gegebenenfalls modifizierten aromatischen Polyisocyanate verwendet werden, doch sind technisch bevorzugt die 2,4-und/oder 2,6-Toluylendiisocyanate, das 4,4'-Diphenylmethan-diisocyanat, gegebenenfalls in Abmischung mit seinen 2,4'- und 2,2'-Isomeren, das 3,3'-Dimethyl-4,4'-diisocyanatodiphenyl, Di- oder Tetraalkyl-substituierte Diphenylmethan-4,4'-diisocyanate, Dimere des Toluylendiisocyanats und/oder Diphenylmethan-diisocyanats, sowie von diesen technisch bevorzugten Diisocyanaten abgeleitete, höherfunktionelle Polyisocyanate, wie z. B. Trimethylolpropan-modifizierte Toluylendiisocyanate.

Als Blockierungsmittel für die NCO-Prepolymeren kommen alle aus der Polyurethanchemie an sich bekannten Verbindungen für die Maskierung von NCO-Gruppen in Frage, welche beim Erhitzen auf über ca. 120° C unter Freisetzung der Isocyanatgruppen wieder abgespalten werden, beispielsweise Ketoxime aus Hydroxylamin und Ketonen wie Aceton, Methylethylketon, Diethylketon, Methylpropylketon, Methylisopropylketon, Methylisobutylketon, Cyclohexanon, Acetophenon und Benzophenon, vorzugsweise das Butandioxim.

Weiterhin eignen sich als Blockierungsmittel Alkylester der Acetessigsäure und der Malonsäure, z. B. Acetessigsäureethylester und Malonsäurediethylester, Lactame wie Caprolactam, sowie Phenole wie Nonylphenol.

Bevorzugte Verwendung finden erfindungsgemäß NCO-Prepolymere aus Polypropylenglykolethern und/oder propoxyliertem 4,4'-Dihydroxy-di-phenyl-dimethylmethan (Bisphenol A) und Toluylendiisocyanat und/oder Diphenylmethandiisocyanat, die mit Methylethylketoxim (Butanonoxim) blockiert sind.

Als Emulgatoren b) dienen, gegebenenfalls als Gemische an sich bekannte Emulgatoren, z. B. Ethoxylierungsprodukte aus Fettalkoholen, Fettsäuren, Fettaminen, alkylierten Phenolen wie Ethoxylierungsprodukte von Oleylalkohol, Laurylalkohol, Ölsäuren, Stearylamin, Nonyl-phenol, 3-Benzyl-4-hydroxybiphenyl. Andere geeignete Emulgatoren sind Salze der Dodecylbenzolsulfonsäure, Salze von alkylierten Naphthalinsulfonsäuren, Umsetzungsprodukte von Hydroxypolylethylenoxiden mit Diisocyanaten, z. B. Toluylendiisocyanat. Die Einsatzmenge an Emulgatorwirkstoff bezogen auf zu dispergierendes High-Solid-Prepolymer beträgt 0,05—5%, bevorzugt 0,1—2%.

c) Weitere Zusatzstoffe, die den wäßrigen Streichpasten zugesetzt werden können sind 0,1—2% Verlaufmittel, vorzugsweise Oxyalkylengruppen-haltige Silikone, 0—1% Entschäumer, bei Verwendung der Streichpaste zur Herstellung kompakter Striche; 0—20% Farbpigmente, Farbpasten oder Füllstoffe wie Kreide, Kieselsäure, Talkum oder Tonerde; bei Verwendung von blockierten aromatischen NCO-Prepolymeren können UV-Absorber oder Lichtschutzmittel (z. B. 0,1 bis 1,5 Gew.-%) eingearbeitet werden. Die angegebenen Zusatzmengen der Hilfsmittel beziehen sich auf das Gewicht der High-Solid-NCO-Prepolymeren a).

d) Zur Verdickung, d. h. zur Einstellung der sog. Streichviskosität der in Wasser dispergierten blockierten NCO-Prepolymeren a), vor oder nach Zusatz der aminischen Vernetzer f), dienen als Verdicker wasserlösliche langkettige Polyethylenoxide, Salze von Poly(meth)acrylsäuren oder Salze von Carboxymethoxycellulose, welche in sehr geringen Zusatzmengen bereits eine sehr starke Verdikkung hervorzurufen vermögen.

Die Einsatzmenge dieser Verdicker bezogen auf NCO-Prepolymer a) liegt zwischen 0,1—2,5% (vorzugsweise 0,3—1,5%).

Gegebenenfalls können als Zusatz e) in Mengen von 0 bis 100 Gew.-%, vorzugsweise 10 bis 50 Gew.-% Polymerfeststoff, bezogen auf Feststoff a), in Form wäßriger Polymerlösungen und/oder Polymerdispersionen dem dispergierten NCO-Prepolymer a) zugesetzt werden.

Geeignete Polymerdispersionen sind beispielsweise Polyurethandispersionen, wäßrige Latices von Homo- und Copolymeren von Vinylmonomeren und gegebenenfalls Dienen.

Die Polyurethandispersionen können anionische, kationische oder nichtionogene Dispersionszentren enthalten, gegebenenfalls auch externe Emulgatoren. Geeignete PUR-Dispersionen werden beispielsweise von D. Dietrich et. al. in J. Oil Col. Chem. Assoc. 1970, 53, 363—369, in Die angewandte Makromolekulare Chemie, 1972, 26, 85—106, in Angewandte Chemie 1970, 82, 53—63, sowie in den DE-Offenlegungsschriften 2 550 860, 1 495 745 (US-Patent 3 479 310), 1 495 770 (US-Patent 3 535 274), 1 495 847 (Can. Patent 764 009), 1 770 068 (US-Patent 3 756 992) sowie 2 314 512 beschrieben.

Bevorzugte PUR-Dispersionen sind solche aus Polyhydroxypolyestern, Hexan- und/oder Isophorondiisocyanat und Ethylendiaminethansulfonat der Formel

$$H_2N-CH_2-CH_2-NH-CH_2-CH_2-SO_3^{\ominus}Na^{\oplus}$$

Die erfindungsgemäß in Frage kommenden Polymerisatlatices können z. B. aus folgenden Monomeren aufgebaut sein: Acryl- und Methacrylsäurealkylester, z. B. des Methanols, Ethanols oder Butanols; Vinylchlorid, Vinylidenchlorid, Vinylacetat, Vinylalkohol (durch Verseifung von Polyvinylacetat), Ethylen, Propylen, Acrylnitril, Styrol, Butadien, Isopren, Chloropren; ferner Acrylamid, N-Methylolacrylamid, Methacrylamid, Acrylsäure und Methacrylsäure. Polymerisatlatices dieser Art werden z. B. im US-Patent 3 869 413 sowie in den DE-Offenlegungsschriften 2 550 832, 2 627 073 und 2 627 074 beschrieben.

Bevorzugte Polymerdispersionen sind solche aus Acrylsäurebutylester, Styrol, Acrylnitril, Acrylamid, Acrylsäure und N-Methylolacrylamid sowie gegebenenfalls Butadien.

Außer den beispielhaft genannten Polymerdispersionen können die Prepolymeren mit geblockten

NCO-Endgruppen auch mit wasserlöslichen oder wasserquellbaren Polymeren verschnitten werden, z. B. mit wäßrigen Lösungen von Casein, mit Caprolactam-modifiziertem Casein, Gelatine, Polyvinylpyrrolidon oder Alginaten.

Als gegenüber Isocyanaten inerte organische Lösungsmittel, welche in den erfindungsgemäßen Beschichtungsmassen gegebenenfalls in geringen Mengen enthalten sein können, seien beispielsweise genannt: Isopropanol, Ethylenglykolmonomethylether, Ethylenglykolmonoethylether und deren Essigsäureester; Methylethylketon, Cyclohexanon, Butylacetat und DMF.

Zum Dispergieren der blockierten NCO-Prepolymeren in Wasser können die Hilfsmittel wie Emulgatoren oder Verlaufsmittel in die High-Solid-Prepolymeren eingearbeitet, sodann kann Wasser in die Mischung eingerührt werden. Es kann aber auch die Mischung aus den blockierten NCO-Prepolymeren und den Hilfsmitteln in ein vorgelegtes Wasservolumen eingerührt werden. Vorteilhaft ist es, die Hilfsmittel in Wasser zu lösen bzw. zu dispergieren und die blockierten Prepolymeren einzurühren; umgekehrt kann auch in die vorgelegten Prepolymeren die wäßrige Lösung bzw. Dispersion der Hilfsmittel eingerührt werden.

Als Vernetzerkomponente f) für die erfindungsgemäßen NCO-Prepolymeren a) dienen aliphatische sowie bevorzugt cycloaliphatische Amine mit mindestens 2 primären Aminogruppen, wie sie ausführlich in der DE-OS 2 814 079 beschrieben sind. Bevorzugt sind aliphatische und cycloaliphatische Diamine. Es sind dies z. B. 1,6-Hexan-, 1,10-Decan- oder 1,12-Dodecan-diamine, ferner 1,6,11-Undecantriamin, bevorzugt jedoch cycloaliphatische Diamine wie 2,4'- und/oder 4,4'-Diamino-dicyclohexylmethane, sowie besonders cycloaliphatische Diamine der Formel I

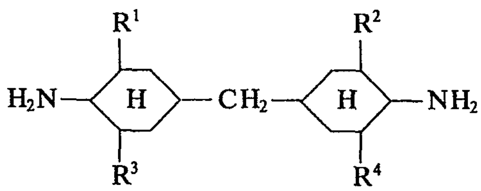

(I)

in welcher

$R^1$, $R^2$, $R^3$ und $R^4$ unabhängig voneinander für Wasserstoff, oder eine $C_1-C_3$-Alkylgruppe (Methyl-, Ethyl-, Propyl-, iso-Propylgruppe) stehen, mit der Maßgabe, daß das Diamin zu mindestens 75% aus dem cis,cis-Isomeren besteht, wenn $R^1$ bis $R^4$ alle Wasserstoff bedeuten.

Geeignete Polyamine sind bei Raumtemperatur flüssige Amine der nachstehenden Formeln III und IV und die tricyclischen Amine gemäß DE-OS 2 638 731 (insbesondere das Diamin der Formel II):

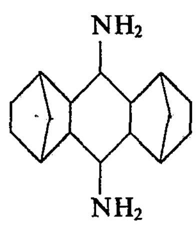

(II)

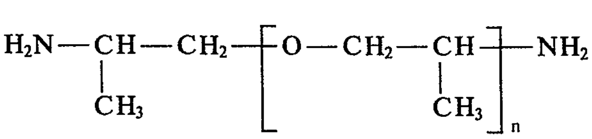

$(n = 2-10)$

(III)

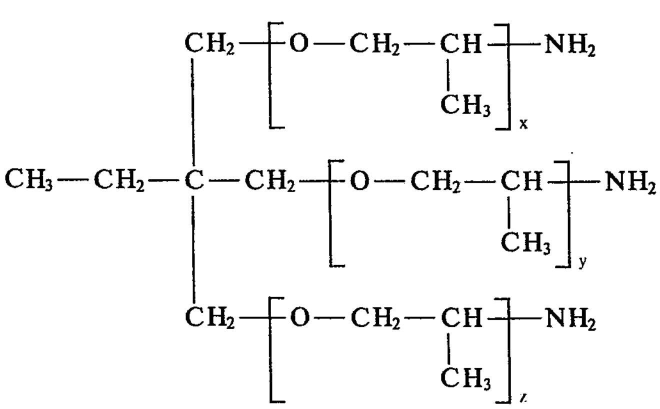

$(3 \leq x + y + z \leq 9)$

(IV)

Erfindungsgemäß bevorzugt ist 4,4'-Diamino-3,3'-dimethyl-dicyclohexylmethan, ein bei Raumtemperatur flüssiges Diamin mit sehr geringem Dampfdruck und passender Reaktivität, sowie guten mechanischen Eigenschaften im Endprodukt Anwendung als Vernetzer-diamin.

Das Äquivalentverhältnis zwischen blockierten NCO-Gruppen und $NH_2$-Gruppen in den Beschichtungsmassen liegt im allgemeinen zwischen 1,3 : 1 und 1 : 1,1, vorzugsweise zwischen 1,15 : 1,0 und 1 : 1, besonders bevorzugt bei 1,1 : 1,0. Es wird im allgemeinen vorteilhafterweise ein NCO-Überschuß verwendet — ein zu großer $NH_2$-Überschuß ist jedoch weniger günstig.

Die aminischen Vernetzer f) können der Dispersion in praktisch jeder Stufe zugemischt werden, sie können z. B. nach der Dispergierung des NCO-Prepolymeren a) oder nach Zusatz aller sonstigen Hilfsmittel zugesetzt werden, sie können aber auch in die NCO-Prepolymeren vor der Dispergierung eingearbeitet werden.

Wie schon erwähnt, sind die erfindungsgemäßen Beschichtungsmassen insbesondere zur Beschichtung von textilen Flächengebilden, Kunstleder, Leder oder Spaltleder geeignet. Die Auftragsmenge kann dabei in weiten Grenzen schwanken; sie liegt im allgemeinen zwischen 10 und 300 g/m², vorzugsweise zwischen 10 und 50 g/m², besonders bevorzugt zwischen 20 und 40 g/m². Die Beschichtungsmassen können sowohl nach dem Direkt- als auch bevorzugt nach dem Umkehrbeschichtungsverfahren appliziert werden. Selbstverständlich ist es dabei gegebenenfalls möglich, neben den erfindungsgemäßen Beschichtungsmassen auf das Substrat auch konventionelle Beschichtungslösungen oder -pasten als weitere Schichten aufzubringen. Solche konventionellen Rezepturen werden z. B. in der DE-Offenlegungsschrift 2 457 387 (US 4 035 213) eingehend als Deck- bzw. Haftstriche beschrieben.

Bevorzugt werden die erfindungsgemäßen Beschichtungspasten als Deckstriche bei der Umkehrbeschichtung von Textilien, Leder oder Spaltleder eingesetzt. Man trägt dazu auf einen geeigneten Zwischenträger (z. B. ein Stahlband, ein Trennpapier, eine Silikonmatrize und dergl.) den Deckstrich aus der erfindungsgemäßen Beschichtungsmasse in einer Dicke von ca. 10 bis 50 g/m², trocknet in einem Trockenkanal und bringt auf den getrockneten Deckstrich den Haftstrich, vorzugsweise nach DE-OS 2 814 079 oder auch die erfindungsgemäßen Streichpasten in einer Dicke von ca. 50 bis 200 g/m² auf, kaschiert dann das Substrat zu, heizt die Beschichtung in einem weiteren Trockenkanal bei ca. 120—190°C, vorzugsweise 140—170°C, während etwa 1,5—3 min Trocknungszeit aus und zieht das beschichtete Substrat vom Trennträger ab.

Wie schon erwähnt, können aber die erfindungsgemäßen Beschichtungsmassen auch im Direktstreichverfahren unmittelbar auf das textile Substrat aufgebracht werden, wobei sie vorteilhafterweise ein nur geringes Penetrieren zeigen.

Zum Aufbringen der Pasten im Transfer- oder im Direktstreichverfahren bedient man sich der bekannten Techniken des Walzenrakels, Gummituchrakels, Reverse Roll Coaters u. a. Darüber hinaus lassen sich mit besonderem Vorteil für hochkonzentrierte Streichpasten die modernen Techniken des Siebdruckes und des Gravurwalzendrucks einsetzen.

In den nachstehenden Beispielen sind Mengenangaben, wenn nicht anders vermerkt, als Gewichtsteile bzw. Gewichtsprozente zu verstehen.

## Beispiele

### Beispiel 1

#### 1.1 Herstellung des NCO-Prepolymers

2000 g eines Polyethers auf Basis von Trimethylolpropan und Propylenoxid mit einer Molmasse von 6000, 1000 g eines linearen Polyethers auf Basis von Propylenglykol und Propylenoxid mit einer Molmasse von 1000, 1450 g eines linearen Polyesters auf Basis von Hexandiol-1,6-Neopentylglykol (Molverhältnis der Diole 65/35) und Adipinsäure der Molmasse 1700 sowie 22,5 g Butandiol-1,4 werden mit 1125 g 4,4'-Diisocyanato-diphenylmethan und 174 g 2,4-Diisocyanato-toluol ca. 3 Stunden lang bei 80—90°C umgesetzt, bis der berechnete NCO-Gehalt von 4,26 Gew.-% knapp unterschritten ist. Anschließend werden bei 60—70°C 496 g Butanonoxim sowie 696 g Ethylenglykolmonomethyletheracetat rasch eingerührt. Nach 20 Min. ist IR-spektroskopisch kein NCO mehr nachweisbar. Das blockierte NCO-Vorpolymerisat, eine farblose, klare Flüssigkeit mit einer Viskosität von ca. 40 000 mPa.s bei 20°C, hat einen bestimmbaren, latenten NCO-Gehalt von 3,3 Gew.-% und somit ein NCO-Äquivalentgewicht von 1280.

#### 1.2 Herstellung der Deckstrichpaste

In 418 g Wasser werden 10,0 g des Na-Salzes einer Carbomethoxycellulose, 8,0 g ethoxyliertes 3-Benzyl-4-hydroxybiphenyl (Ethoxylierungsgrad ca. 15), 2,0 g eines Umsetzungsproduktes aus Hydroxy-polyethylenoxid (Ethoxylierungsgrad ca. 10) mit Toluylendiisocyanat im Molverhältnis 2 : 1 und

5,0 g eines wasserlöslichen Oxethylgruppen-haltigen Dimethylpolysiloxans (ca. 10 Ethoxylgruppen) gelöst, ferner werden 1,0 g eines hochmolekularen Dimethylpolysiloxans hinzugefügt.

Unter gutem Rühren werden 556 g des blockierten NCO-Prepolymeren, 90%ig in Ethylenglykolmonomethyletheracetat, hergestellt nach Beispiel 1.1 in der wäßrigen Phase dispergiert. Die erhaltene Dispersion ist 50%ig bezogen auf blockiertes NCO-Prepolymer, die Viskosität liegt bei ca. 22 000 mPa.s/25°C. In diese Dispersion werden 50,0 g 3,3'-Dimethyl-4,4'-diamino-dicyclohexylmethan als Diamin eingerührt: jetzige Viskosität der Streichpaste ca. 14 000 mPa.s/25°C. Zur Verarbeitung als Deckstrich werden 150 g einer handelsüblichen wäßrigen Pigmentpaste aus 40% $TiO_2$, 5% Casein und Wasser eingeführt.

## 1.3 NCO-Prepolymer

4000 g eines Hydroxylpolyethers auf Basis von Trimethylolpropan und Propylenoxid mit der Molmasse 6000 sowie 275 g eines Hydroxylpolyethers auf Basis von 4,4'-Dihydroxy-diphenyl-dimethylmethan (Bisphenol A — Bayer AG) und Propylenoxid mit der Molmasse 550 werden mit 375 g 4,4'-Diisocyanato-diphenylmethan sowie 261 g 2,4-Diisocyanato-toluol bei 80—90°C umgesetzt, bis der berechnete NCO-Gehalt von 2,56 Gew.-% knapp unterschritten ist. Danach rührt man in die Mischung bei 60—70°C 261 g Butanonoxim ein. Nach ca. 20 Min. ist IR-spektroskopisch kein NCO mehr nachweisbar. Das blockierte NCO-Vorpolymerisat, eine klare farblose Flüssigkeit mit einer Viskosität von ca. 50 000 mPa.s bei 20°C, hat einen bestimmbaren, latenten NCO-Gehalt von 2,34 Gew.-% und somit ein NCO-Äquivalentgewicht von 1800.

## 1.4 Herstellung der Haftstrichpaste

510 g eines blockierten NCO-Prepolymeren, 2% Methylglykol enthaltend, hergestellt nach Beispiel 1.3 mit einem latenten NCO-Gehalt von ca. 2,3% werden vorgelegt. Man rührt in das NCO-Prepolymer 20 g ethoxyliertes 3-Benzyl-4-hydroxybiphenyl (Ethoxylierungsgrad 15) und 5,0 g eines Umsetzungsproduktes aus Hydroxy-polyethylenoxid mit Toluylendiisocyanat (wie unter 1.2 beschrieben) ein.

Nach Zugabe von 465 g Wasser unter gutem Rühren erhält man eine stabile 50%ige Dispersion des blockierten NCO-Prepolymeren, die durch Zugabe von 31,6 g 3,3'-Dimethyl-4,4'diamino-dicyclohexylmethan als Vernetzer in die gebrauchsfertige Haftstrichpaste überführt wird; Viskosität ca. 15 000 mPa.s/25°C.

## 1.5 Transferbeschichtung (Deckstrich + Haftstrich)

### 1.5.1

Auf einer Tandem-Beschichtungsmaschine wird am 1. Streichwerk mittels eines Walzenrakels die Dispersions-Streichpaste nach 1.2 auf ein naßfestes Trennpapier in einer Auftragsmenge von ca. 70 g/m$^2$ Naßauflage gestrichen. Im Trockenkanal wird beginnend bei 90°C, steigend bis 160—170°C, das Wasser verdampft und das blockierte NCO-Prepolymer mit dem Diamin-Vernetzer zum PUR-Kunststoff umgesetzt. (Reaktionszeit 1,5—2 Min.) Der Deckstrich hat ein Trockengewicht von ca. 35 g/m$^2$. Die Beschichtungspaste zeigt einen guten Verlauf und ergibt Deckstriche mit glatter Oberfläche und gutem, trockenen Griff.

Am 2. Streichwerk wird in analoger Weise die Haftstrichpaste 1.4 aufgerakelt, Naßauflage ca. 80 g/m$^2$, Trockenauflage ca. 40 g/m$^2$. Auf den nassen Haftstrich wird ein Gewebe aus Baumwolle oder Baumwoll/Polyester von ca. 200 g/m$^2$ kaschiert. Trocknung und Vernetzung erfolgt wie beim Deckstrich. Man erhält einen Beschichtungsartikel mit trockener Oberfläche, weichem Griff, gutem Narbenwurf, hohen Knickechtheiten, Chemischreinigungsbeständigkeit, hoher Hydrolyseechtheit.

### 1.5.2.

Analogverfahren auf einer Tridem-Beschichtungsmaschine mit »Trockenkaschier«-Methode (wie unter 1.5.1) wird im 1. Kanal der Deckstrich hergestellt.

Wie unter 1.5.1 wird am 2. Streichwerk die Haftstrichpaste 1.4 mit einer Naßauflage von ca. 80 g/m$^2$ gerakelt. Nach dem Verdampfen des Wassers wird jedoch bei nur 120—135°C ein »Vorreagieren« des blockierten NCO-Prepolymeren mit dem aminischen Vernetzer herbeigeführt.

Erst vor dem 3. Kanal wird das Textil auf den schon »trockenen« Haftstrich kaschiert und dann die Vernetzungsreaktion im 3. Kanal bei 150—160—170°C zu Ende geführt.

## Beispiel 2

### 2.1 Herstellung von Haftstrichpasten

#### 2.1.1 Dispersion eines blockierten NCO-Prepolymeren im Verschnitt mit einer 1-Komponenten-PUR-Dispersion

In 1000 g der im Beispiel 1.4 hergestellten Dispersion eines blockierten NCO-Prepolymeren werden nach Zugabe von 31,6 g 3,3'-Dimethyl-4,4'-diamino-dicyclo-hexylmethan als Kettenverlängererdiamin 500 g einer 40%igen PUR-Dispersion zugegeben. Das resultierende Dispersionsgemisch hat eine Viskosität von ca. 7000 mPa.s/25° C. Die Herstellung der 40%igen PUR-Dispersion ist in DE-OS 2 814 173/Beispiel 3 beschrieben.

#### 2.1.2 Dispersion eines blockierten NCO-Prepolymeren im Verschnitt mit einer Polyacryl-Dispersion

Zur 1031,6 g der unter 1.4 beschriebenen, mit Diamin versehenen Dispersion eines blockierten NCO-Prepolymeren fügt man 300 g einer 40%igen Polyacrylat-Dispersion, wobei das Polyacrylat aus Acrylsäurebutylester, Styrol und Methylolacrylamid besteht.
Das Dispersionsgemisch hat eine Viskosität von ca. 10 000 mPa.s/25° C.

#### 2.1.3 Dispersion eines blockierten NCO-Prepolymeren im Verschnitt mit einem selbstvernetzenden Latex

Zu 1031,6 g der unter 1.4 beschriebenen, mit Diamin versehenen Dispersion eines blockierten NCO-Prepolymeren fügt man 200 g eines 40%igen NBR-Latex aus Acrylnitril, Butadien und N-Methylolacrylamid. Das Dispersionsgemisch hat eine Viskosität von ca. 12 000 mPa.s/25° C.

#### 2.1.4 Dispersion eines blockierten NCO-Prepolymeren im Verschnitt mit einer Polyvinylchlorid-Dispersion

Zu 1031,6 g der unter 1.4 beschriebenen, mit Diamin versehenen Dispersion eines blockierten NCO-Prepolymeren fügt man 100 g einer 50%igen PVC-Dispersion. Das Dispersionsgemisch hat eine Viskosität von ca. 15 000 mPa.s/25° C.

### 2.2 Transferbeschichtung (Deckstrich + Haftstrich)

Wie im Beispiel 1 und 1.5.1 beschrieben, wird auf einer Tandembeschichtungsanlage am 1. Streichwerk der Dispersionsdeckstrich gemäß Beispiel 1.2 verarbeitet. Naßauflage 60 g/m², Trockengewicht des Deckstriches 30 g/m². Am zweiten Streichwerk werden die Haftstrich-Pasten, Dispersionsmischungen 2.1.1, 2.1.2, 2.1.3 alternativ mit einer Naßauflage von 60 g/m², Trockenauflage ca. 30 g/m², aufgerakelt. Auf den nassen Dispersionshaftstrich wird ein leichtes Zellwollgewebe von 100 g/m² kaschiert. Trocknung und Vernetzung erfolgt zwischen 90 und 170° C. Man erhält einen leichten, weichen, Nappaleder-artigen Artikel von weichem Griff.

## Beispiel 3

### 3.1 NCO-Prepolymer

2000 g eines Hydroxylpolyesters auf Basis von Hexandiol-1,6-Neopentylglykol (Molverhältnis der Diole 65/35) und Adipinsäure mit einer Molmasse von 1700 werden mit 358 g 2,4-Diisocyanato-toluol bei 80—90° C bis zu einem NCO-Gehalt von 4,25 Gew.-% umgesetzt. In dieses Prepolymere werden bei 70° C 174 g Butanondioxim sowie 250 g Ethylenglykolmonomethyletheracetat rasch eingerührt. Nach ca. 20 Min. ist IR-spektroskopisch kein NCO mehr nachweisbar. Das blockierte NCO-Vorpolymerisat, eine farblose, klare Flüssigkeit mit einer Viskosität von ca. 40 000 mPa.s bei 20° C, hat einen bestimmbaren, latenten NCO-Gehalt von 3,5 Gew.-% und somit ein NCO-Äquivalentgewicht von 1200.

### 3.2 Herstellung der Deckstrichpaste

350 g des blockierten NCO-Prepolymeren nach 1.1 und 150 g des blockierten NCO-Prepolymeren nach 3.1 werden gemischt.

Zur Herstellung einer 45%igen Dispersion dieser blockierten NCO-Prepolymeren werden 500 g einer wäßrigen Zubereitung der nachfolgend beschriebenen Zusammensetzung in das Prepolymergemisch eingerührt:

| | |
|---|---|
| 28,0 g | Na-Salz einer Carboxymethylzellulose |
| 16,0 g | ethoxyliertes 3-Benzyl-4-hydroxy-biphenyl (Ethoxylierungsgrad ca. 15) |
| 4,0 g | Umsetzungsprodukt aus Hydroxypolyethylenoxid (Ethoxylierungsgrad ca. 10) mit Toluylendiisocyanat (Molverhältnis 2 : 1) |
| 10,0 g | ethoxyliertes Polymethylsiloxan (Ethoxylierungsgrad ca. 10) |
| 2,0 g | hochmolekulares Polydimethylsiloxan |
| 940,0 g | Wasser |

Die erhaltene 45%ige Dispersion, bezogen auf blockiertes NCO-Prepolymer, hat eine Viskosität von ca. 20 000 mPa.s. 46,0 g 3,3'-Dimethyl-4,4'-diamino-dicyclohexylmethan als Vernetzer und 120 g einer handelsüblichen wäßrigen Pigmentpaste (s. Beispiel 1) werden eingerührt.

### 3.3 Herstellung der Zwischenstrichpaste

330 g der in diesem Beispiel unter 3.2 beschriebenen wäßrigen Zubereitung von Dispergierhilfsmitteln, Verdickern, Entschäumern werden vorgelegt. 670 g des unter 3.1 genannten blockierten NCO-Prepolymeren werden in der wäßrigen Zubereitung dispergiert. Man erhält eine bezüglich blockiertem NCO-Prepolymeren 60%ige Dispersion. Vor Gebrauch werden 65,5 g 3,3'-Dimethyl-4,4'-diaminodicyclohexylmethan als Vernetzer-Diamin eingerührt.

### 3.4 Herstellung der Haftstrichpaste (mechanisch verschäumbar)

Zu 1000 g der in Beispiel 1.4 beschriebenen Haftstrichpaste, die bereits die dort genannte Menge Diamin als Vernetzer enthält, fügt man 500 g einer 40%igen PUR-Dispersion (Herstellung dieser Dispersion gemäß DE-OS 2 814 173/Beispiel 3) und 10 g Ammonium-stearat. Bei Verwendung als Haftstrich wird die Dispersionszubereitung mechanisch zu einem Schaum von 500 g/l geschlagen.

### 3.5 Transferbeschichtung auf einer Tridem-Beschichtungsmaschine

1. Kanal: Deckstrich;
   Naßauflage: 60 g/m²; Trockenauflage ca. 30 g/m²;
2. Kanal: Zwischenstrich;
   Naßauflage: 120 g/m²; Trockenauflage: ca. 75 g/m²;
3. Kanal: Haftstrich, Schlagschaum;
   Naßauflage: 70 g/m²; Trockenauflage: ca. 30 g/m²;
   Raumgewicht: 500—600 g/l;
   Trocken- und Vernetzungsbedingungen: 90—170° C;
   Verweilzeit zwischen 140—170° C: ca. 1,5 min.

## Beispiel 4

### 4.1

Mit der in Beispiel 1.4 beschriebenen Dispersions-Streichpaste wird ein PES-Gewebe von 200 g/m²-Gewicht im Direktstreichverfahren grundiert. Auflage ca. 40 g/m² Trockengewicht.

Die als Schlußstrich verwendete Dispersion wird wie folgt hergestellt:

500 g eines mit Butanonoxim blockierten NCO-Prepolymeren (4.2) auf Basis von Polyethern und Diphenylmethandiisocyanat, werden in 500 g der im Beispiel 3.2 beschriebenen wäßrigen Zubereitung dispergiert. In die bezüglich blockiertem NCO-Prepolymer 50%ige Dispersion werden 33,9 g 3,3'-Dimethyl-4,4'-diamino-dicyclohexylmethan als Vernetzer eingerührt. Auf das grundierte PES-Gewebe wird im Direktstreichverfahren der Schlußstrich gerakelt: Naßauflage ca. 120 g/m², Trockenauflage ca. 60 g/m², Trocken- und Vernetzungsbedingungen: 70—170° C ansteigend.

4.2 Herstellung des NCO-Prepolymers (s. o.)

1600 g eines auf Trimethylolpropan gestarteten Polyethers aus 80% Propylenoxid und 20% Ethylenoxid, OH-Zahl 28 und 200 g eines auf 4,4'-Dihydroxy-diphenyl-dimethylmethan gestarteten Polyoxypropylenetherdiols (OH-Zahl 200) werden 30 min bei 120°C im Wasserstrahlvakuum entwässert. Man kühlt auf ca. 40°C und gibt 200 g 4,4'-Diphenylmethan-diisocyanat und 140 g Toluylen-diisocyanat (80/20—2,4/2,6-Isomeres) zu. Man läßt jetzt bei 60°C bis zu einem NCO-Gehalt von 2,9% reagieren (3—4 Stunden). Wenn dieser NCO-Gehalt erreicht ist, tropft man 129 g Butanoxim zu und hält das Gemisch bei 80°C, bis alle NCO-Gruppen abreagiert sind. Durch Zugabe von 22 g Methylethylketon und 22 g Isopropanol stellt man eine Viskosität von 60—65 000 mPa.s bei 25°C ein. Der Gehalt an verkappten NCO-Gruppen beträgt 2,7%.

Beispiel 5

5.1 Beschichtung

500 g der im Beispiel 3.2 beschriebenen wäßrigen Zubereitung von Dispergierhilfsmitteln, Verdikkern, Entschäumer werden vorgelegt. 500 g eines aliphatischen, blockierten NCO-Prepolymeren 5.2 werden unter gutem Rühren zufließen lassen. Man erhält bezogen auf Prepolymer eine 40%ige Dispersion mit einer Viskosität von ca. 12 000 mPa.s. Vor Gebrauch werden 35,0 g 3,3'-Dimethyl-4,4'-diamino-dicyclohexylmethan als Vernetzer eingerührt. Diese Streichpaste wird im Direktbeschichtungsverfahren auf ein Polyamid-Gewebe von ca. 100 g/m$^2$ per Gummituchrakel gestrichen. Die Naßauflage beträgt ca. 70 g/m$^2$ entsprechend einer Trockenauflage von ca. 40 g/m$^2$. Trocken- und Vernetzungsbedingungen: 90—170°C. Verweilzeit zwischen 140—170°C ca. 3 min.

5.2 Herstellung des blockierten NCO-Vorpolymerisats

1000 Gew.-Teile eines Hydroxylpolyester-Polycarbonates (OH-Zahl 56), hergestellt aus dem Esterglykol von $\varepsilon$-Caprolacton und Hexandiol-1,6 (Molverhältnis 1 : 1) mit Diphenylcarbonat gemäß der DE-AS 1 770 245, werden zusammen mit 298 Gew.-Teilen 4,4-Diisocyanato-dicyclohexylmethan (70 Gew.-% cis/cis-Isomeren-Anteil) etwa 2 Stunden bei 115°C umgesetzt, bis der ermittelte NCO-Gehalt bei 4,1% liegt. Danach wird die Lösung aus 23,6 g (0,1 Mol) Gew.-Teilen des 5.3 beschriebenen Bis-carbazinester-diols in 355 Gew.-Teilen Ethylenglykolmonomethylether-acetat hinzugegeben und bis zu einem NCO-Gehalt der NCO-Vorpolymerisatlösung von 2,7 umgesetzt. Anschließend kühlt man auf etwa 70°C ab, fügt 94 Gew.-Teile Butanonoxim hinzu und überprüft nach etwa 10- bis 20minütiger Nachrührzeit die NCO-Blockierungsreaktion anhand des IR-Spektrums. Das Oxim-blockierte NCO-Vorpolymerisat (80% Feststoff) stellt eine farblose, klare Flüssigkeit mit einer Viskosität von 35 000 mPa.s bei 20°C dar und hat einen bestimmbaren, latenten NCO-Gehalt von 2,5% und somit ein NCO-Äquivalentgewicht von 1680.

5.3 Herstellung des Bis-carbazinester-diols

90 Gew.-Teile Hydrazinhydrat und etwa 100 Gew.-Teile Toluol werden vorgelegt, die sich bildenden 2 Phasen gut gerührt. Bei Raumtemperatur gibt man hierzu portionsweise 204 Gew.-Teile Propylenglykolcarbonat (2-Oxo-4-methyl-1,3-dioxolan), worauf ein leichter Temperaturanstieg bis etwa 60°C zu beobachten ist. Nach beendeter Zugabe wird 1 Stunde bei 100°C gerührt, danach werden bei dieser Temperatur Toluol und Hydratwasser bei 15 bis 18 mbar abdestilliert. Es verbleiben 236 Gew.-Teile eines klaren, farblosen Öls des Bis-carbazinester-diols, das nach Destillation (110°C/0,04 mbar) eine ermittelte Molmasse von 236 besitzt. Formel:

$$HO-\overset{\displaystyle CH_3}{\overset{|}{CH}}-CH_2-O-CO-NH-NH-CO-O-CH_2-\overset{\displaystyle CH_3}{\overset{|}{CH}}-OH$$

(und geringe Anteile der Isomeren mit primären OH-Gruppen).

**Patentansprüche**

1. Verfahren zur Herstellung von feindispersen, gut streichbaren, wäßrigen PU-Reaktiv-Beschichtungsmassen auf der Basis von blockierten NCO-Prepolymeren, Polyaminen, gegebenenfalls Polyurethan-Dispersionen und/oder wäßrigen Polymerlösungen zum Beschichten von textilen Flächengebilden, Kunstleder oder Leder nach dem Direkt- oder Transferbeschichtungsverfahren, dadurch gekennzeichnet, daß man

a) blockierte NCO-Prepolymere
b) in Gegenwart von 0,05—5 Gew.-%, bezogen auf a), an Emulgatoren zu 20—69% a) enthaltenden, wäßrigen Dispersionen dispergiert und bei oder nach der Dispergierung mit
c) gegebenenfalls Verlaufmitteln und üblichen Zusatzstoffen wie Pigmenten, Füllstoffen und Stabilisatoren, mit
d) 0,1 bis 2,5 Gew.-%, bezogen auf a) wasserlöslichen Verdickungsmitteln auf der Basis von langkettigen Polyethylenoxiden, Salzen von Poly(meth)acrylsäuren oder Salzen von Carboxymethylzellulose, mit
e) gegebenenfalls einem Zusatz weiterer wäßriger Polymerlösungen und/oder Polymerdispersionen in Mengen von bis 100 Gew.-% Polymerfeststoff, bezogen auf a), versetzt mit
f) etwa äquivalenten Mengen an (cyclo)aliphatischen Di- und/oder Polyaminen in eine streichfähige Beschichtungsmasse mit einer Viskosität von 3000 bis 22 000 mPa.s/25° C mit einem Feststoffgehalt von 20—69 Gew.-% überführt.

2. Verfahren nach Anspruch 1, dadurch gekennzeichnet, daß man in Gegenwart von 0,1 bis 2,5 Gew.-% an Emulgatoren b) zu 35—50 Gew.-% a) enthaltenden, wäßrigen Dispersionen dispergiert.

3. Verfahren nach Ansprüchen 1 und 2, dadurch gekennzeichnet, daß man bis zu 10 Gew.-%, bezogen auf a), an Lösungsmitteln mitverwendet.

4. Verfahren nach Ansprüchen 1 bis 3, dadurch gekennzeichnet, daß man mit 0,3 bis 1,5 Gew.-%, bezogen auf a), an wasserlöslichen Verdickungsmitteln d) versetzt.

5. Verfahren nach Ansprüchen 1 bis 4, dadurch gekennzeichnet, daß man mit weiteren wäßrigen Polymerlösungen und/oder Polymerdispersionen in Mengen von 10 bis 50 Gew.-% Polymerfeststoff e), bezogen auf a), versetzt.

6. Verfahren nach Ansprüchen 1 bis 5, dadurch gekennzeichnet, daß man streichfähige Beschichtungsmassen mit einer Viskosität von 4000 bis 15 000 mPa.s/25° C herstellt.

7. Verfahren nach Ansprüchen 1 bis 6, dadurch gekennzeichnet, daß man etwa äquivalente Mengen an cycloaliphatischen Diaminen, bezogen auf den NCO-Gehalt von a), verwendet.

8. Bei Raumtemperatur lagerstabile, gut streichfähige Beschichtungsmassen mit einer Viskosität von 3000 bis 22 000 mPa.s/25° C und einem Feststoffgehalt von 20 bis 69 Gew.-%, auf der Basis wäßriger Dispersionen von blockierten NCO-Prepolymeren a), etwa äquivalenten Mengen an (cyclo)aliphatischen Polyaminen f), 0,05 bis 5 Gew.-% an Emulgatoren b), 0,1 bis 2,5 Gew.-% an wasserlöslichen Verdickungsmitteln d) auf der Basis von langkettigen Polyethylenoxiden, Salzen von Poly(meth)acrylsäuren oder Salzen von Carboxymethylzellulose und gegebenenfalls Zusatz von wäßrigen Polymerlösungen und/oder Polymerdispersionen e) in Mengen von bis 100 Gew.-% Polymerfeststoff, bezogen auf a), und gegebenenfalls Verlaufmitteln und üblichen Zusatzstoffen c).

9. Beschichtungsmassen nach Anspruch 8, mit einer Viskosität von 4000 bis 15 000 mPa.s/25° C, einem Feststoffgehalt von 35 bis 50 Gew.-%, auf der Basis wäßriger Dispersionen von blockierten NCO-Prepolymeren a), etwa äquivalenten Mengen an cycloaliphatischen Diaminen f), 0,1 bis 2,5 Gew.-% an Emulgatoren b), 0,3 bis 1,5 Gew.-% an wasserlöslichen Verdickern d) und gegebenenfalls unter Zusatz von 10 bis 50 Gew.-% an Polymerfeststoff e), bezogen auf a), von wäßrigen Polymerlösungen und/oder Polymerdispersionen e) und gegebenenfalls Verlaufmitteln und üblichen Zusatzstoffen c).

10. Verwendung von hitzehärtbaren Beschichtungsmassen in Form feindisperser wäßriger Dispersionen, hergestellt nach Ansprüchen 1 bis 7, zur Beschichtung von textilen oder Ledersubstraten in vorzugsweise geringen Feststoffauflagen von 10 bis 50 g/cm$^2$, unter anschließender Hitzehärtung bei Temperaturen oberhalb 110° C.

## Claims

1. Process for the preparation of finely dispersed, easily spreadable, aqueous PU reactive coating compositions based on blocked NCO prepolymers, polyamines, optionally polyurethane dispersions and/or aqueous polymer solutions for coating textile sheet products, artificial leather or leather by the direct or transfer coating process, characterised in that

a) blocked NCO prepolymers,
b) are dispersed in the presence of 0,05—5% by weight, based on a) of emulsifiers to form aqueous dispersions containing 20—69 of a) and during or after the dispersion
c) optionally, levelling agents and customary additives such as pigments, fillers and stabilisers,
d) 0,1 to 2,5% by weight based on a), of water-soluble thickening agents based on long-chain polyethylene oxides, salts of poly(meth)acrylic acids or salts of carboxymethylcellulose,
e) optionally, further aqueous polymer solutions and/or polymer dispersions in quantities of up to 100% by weight of solid polymer, based on a), are added and

f) the mixture is converted, using approximately equivalent quantities of (cyclo)aliphatic di- and/or polyamines, into a spreadable coating composition having a viscosity of 3000 to 22 000 mPa.s/25° C and a solids content of 20—69% by weight.

2. Process according to Claim 1, characterised in that the dispersion is carried out in the presence of 0,1 to 2,5% by weight of emulsifiers b) to form aqueous dispersions containing 35—50% by weight of a).

3. Process according to Claims 1 and 2, characterised in that up to 10% by weight, based on a), of solvents are also used.

4. Process according to Claims 1 to 3, characterised in that 0,3 to 1,5% by weight, based on a), of water-soluble thickening agents d) are added.

5. Process according to Claims 1 to 4, characterised in that further aqueous polymer solutions and/or polymer dispersions are added, in quantities of 10 to 50% by weight of solid polymer e), based on a).

6. Process according to Claims 1 to 5, characterised in that spreadable coating compositions having a viscosity of 4000 to 15 000 mPa.s/25° C are prepared.

7. Process according to Claims 1 to 6, characterised in that approximately equivalent quantities of cycloaliphatic diamines, based on the NCO content of a), are used.

8. Easily spreadable coating compositions which are storage-stable at room temperature and have a viscosity of 3000 to 22 000 mPa.s/25° C and a solids content of 20 to 69% by weight and are based on aqueous dispersions of blocked NCO prepolymers a), approximately equivalent quantities of (cyclo)aliphatic polyamines f), 0,05 to 5% by weight of emulsifiers b), 0,1 to 2,5% by weight of water-soluble thickening agents d) based on long-chain polyethylene oxides, salts of poly(meth)acrylic acids or salts of carboxymethylcellulose, and an optional addition of aqueous polymer solutions, and/or polymer dispersions e) in quantities of up to 100% by weight of solid polymer, based on a), and optionally levelling agents and customary additives c).

9. Coating compositions according to Claim 8, having a viscosity of 4000 to 15 000 mPa.s/25° C, a solids content of 35 to 50% by weight, and based on aqueous dispersions of blocked NCO prepolymers a), approximately equivalent quantities of cycloaliphatic diamines f), 0,1 to 2,5% by weight of emulsifiers b), 0,3 to 1,5% by weight of water-soluble thickeners d) and optionally with the addition of 10 to 50% by weight of solid polymer e), based on a), of aqueous polymer solutions, and/or polymer dispersions e) and optionally levelling agents and customary additives c).

10. Use of heat-hardening coating compositions in the form of finely dispersed aqueous dispersions prepared according to Claims 1 to 7 for coating textile or leather substrates in preferably low solid applications of 10 to 50 g/cm$^2$, followed by heat-hardening at temperature higher than 110° C.

**Revendications**

1. Procédé de préparation de compositions aqueuses d'enduction réactive de polyuréthannes en fines dispersions, pouvant être appliquées par enduction, à base de prépolymères à groupes NCO bloqués, de polyamines, éventuellement de dispersions de polyuréthannes et/ou solutions aqueuses de polymères pour l'enduction d'objets textiles plats, de similicuirs ou de cuirs par le procédé d'enduction directe ou d'enduction par transfert, procédé caractérisé en ce que l'on disperse:

a) des prépolymères contenant des groupes NCO bloqués,
b) en présence de 0,05 à 5% en poids, par rapport à a), d'émulsifiants pour obtenir des dispersions aqueuses contenant 20 à 69% en poids de a), et, pendant ou après la dispersion, on ajoute
c) éventuellement des agents de fluidification ou d'étalement et des additifs usuels comme des pigments, des charges et des stabilisants,
d) on ajoute 0,1 à 2,5% en poids, par rapport à a), d'épaississants solubles dans l'eau, à base de poly(oxyde d'éthylène) en longue chaîne, des sels d'acides poly(meth)acryliques ou des sels de carboxyméthylcellulose,
e) on ajoute éventuellement d'autres solutions aqueuses de polymère et/ou des dispersions de polymère, en des quantités allant jusqu'à 100% en poids de polymère sec, par rapport à a) et
f) avec une quantité approximativement équivalente de di- et/ou de polyamines (cyclo)aliphatiques, on transforme en une composition pouvant être appliquée par enduction, ayant une viscosité de 3000 à 22 000 mPa.s à 25° C et un extrait sec de 20 à 69% en poids.

2. Procédé selon la revendication 1, caractérisé en ce qu'en présence de 0,1 à 2,5% en poids des émulsifiants b), on disperse jusqu'à obtenir des dispersions aqueuses contenant 35 à 50% en poids de a).

3. Procédé selon les revendications 1 et 2, caractérisé en ce qu'on utilise aussi jusqu'à 10% en poids, par rapport à a), de solvants.

4. Procédé selon les revendications 1 à 3, caractérisé en ce qu'on ajoute 0,3 à 1,5% en poids, par rapport à a), des épaississants b) hydrosolubles.

5. Procédé selon les revendications 1 à 4, caractérisé en ce qu'on ajoute d'autres solutions aqueuses de polymère et/ou dispersion de polymère, en des quantités de 10 à 50% en poids de solides de polymère e), par rapport à a).

6. Procédé selon les revendications 1 à 5, caractérisé en ce qu'on prépare des compositions pouvant être appliquées par enduction ayant une viscosité de 4000 à 15 mPa.s/25° C.

7. Procédé selon les revendications 1 à 6, caractérisé en ce qu'on utilise des quantités approximativement équivalentes de diamines cycloaliphatiques, par rapport à la teneur en NCO de a).

8. Compositions d'enduction bien applicables, stables au magasinage à la température ambiante, ayant une viscosité de 3000 à 22 mPa.s à 25° C et une teneur en substances sèches de 20 à 69% en poids, à base de dispersions aqueuses de prépolymères a) contenant des groupes NCO bloqués, de quantités approximativement équivalentes de polyamines (cyclo)aliphatiques f), de 0,05% en poids d'émulsifiants b), de 0,1 à 22,5% en poids d'épaississants hydrosolubles d) à base de poly(oxydes d'éthylène) à longue chaîne, de sels de polyacides(meth)acryliques ou des sels de carboxyméthylcellulose et éventuellement comportant une addition de solutions aqueuses de polymère et/ou de dispersions de polymère e) en des quantités allant jusqu'à 100% en poids de polymère sec, par rapport à a), et éventuellement des agents de fluidification ou d'étalement et des additifs usuels c).

9. Compositions d'enduction selon la revendication 8, ayant une viscosité de 4000 à 15 000 mPa.s/ 25° C, une teneur en substances sèches de 35 à 50% en poids, sur la base de dispersions aqueuses de prépolymères a) contenant des groupes NCO bloqués, des quantités approximativement équivalentes de diamines cycloaliphatiques f), 0,1 à 2,5% en poids d'émulsifiants b), 0,3 à 1,5% en poids d'épaississants hydrosolubles d) et éventuellement comportant l'addition de 10 à 50% en poids des solides de polymère e), par rapport à a), de solutions de polymère et/ou de dispersions de polymère e) et éventuellement das agents de fluidité ou de nivellement et des additifs usuels c).

10. Utilisation de compositions d'enduction durcissables à chaud, sous forme de dispersions aqueuses finement dispersées préparées selon les revendications 1 à 7, pour l'enduction de textiles ou de substrats en cuir, en des couches appliquées ayant de préférence une faible teneur en matières sèches de 10 à 50 $g/m^2$, avec durcissement subséquent par chauffage à des températures supérieures à 110° C.